Europäisches Patentamt

European Patent Office

Office européen des brevets

(19)

(11) Numéro de publication : **0 106 764**
**B1**

(12) **FASCICULE DE BREVET EUROPÉEN**

(45) Date de publication du fascicule du brevet :
04.05.88

(51) Int. Cl.⁴ : **C 08 L101/00, C 08 J 5/04 //**
**(C08L101/00, 27:12)**

(21) Numéro de dépôt : **83401994.5**

(22) Date de dépôt : **13.10.83**

(54) **Procédé de fabrication de matériaux composites thermoplastiques à matrice et phase renforçante fibrillaire polymérique.**

(30) Priorité : 14.10.82 FR 8217188

(43) Date de publication de la demande :
25.04.84 Bulletin 84/17

(45) Mention de la délivrance du brevet :
04.05.88 Bulletin 88/18

(84) Etats contractants désignés :
AT BE CH DE FR GB IT LI LU NL SE

(56) Documents cités :
DE-A- 3 027 149
FR-A- 2 226 438
US-A- 3 675 391
US-A- 4 075 158
CHEMICAL ABSTRACTS, vol. 83, no. 2, 14 juillet 1975,
page 93, no. 12135z, Columbus, Ohio, US
Kirk-Othmer -3 Edition, Vol. 11; 1980, P. 1-9
Kunststoff Handbuch -Maurer v. 1971 -Vol. 11 P. 345
Le dossier contient des informations techniques
présentées postérieurement au dépôt de la demande
et ne figurant pas dans le présent fascicule.

(73) Titulaire : Société Chimique des Charbonnages S.A.
Tour Aurore Place des Reflets
F-92080 Paris La Défense 2 Cédex 5 (FR)

(72) Inventeur : Fajolle, Raymond
2, rue de Creil
F-60550 Verneuil en Halatte (FR)

(74) Mandataire : Dubost, Thierry
SOCIETE CHIMIQUE DES CHARBONNAGES Service
Propriété Industrielle B.P. 57
F-62670 Mazingarbe (FR)

EP 0 106 764 B1

Jouve, 18, rue St-Denis, 75001 Paris, France

**0 106 764**

**Description**

La présente invention concerne des matériaux composites thermoplastiques à matrice et phase renforçante fibrillaire polymérique et un procédé pour leur fabrication.

Certains matériaux composites comportant une matrice thermoplastique particulière et une phase fibrillaire thermoplastique particulière sont déjà connus. Ainsi M. V. Tsebrenko, A. V. Yudin, T. I. Ablazova et G. V. Vinogradov ont décrit dans Polymer, 1976, Vol. 17, septembre, pages 831-834, le mécanisme de la fibrillation dans le cas de polyoxyméthylène en mélange avec 70 % d'une matrice de copolyamide, obtenue par extrusion à une température supérieure à la température de fusion du polyoxyméthylène.

On connaît également, par FR-A-2.226.438, une matière plastique renforcée comprenant une matrice en matière plastique (constituée par exemple par du chlorure de polyvinyle, du polyéthylène, des copolymères d'acétate de vinyle, du polystyrène, etc...) dans laquelle est dispersée au moins 5 % en poids d'un polymère cristallin à très haute masse moléculaire (par exemple une polyoléfine, notamment le polyéthylène et le polypropylène isotactique) à l'état de fines particules qui, en proportion notable, sont étirées, sous la forme de fibrilles allongées dans ladite matrice. Le procédé consiste à malaxer la matrice en matière plastique et le polymère à très haute masse moléculaire à une température supérieure au point de fusion du polymère. Le mélange peut être obtenu par exemple dans un appareil tel qu'une calandre, un mélangeur à cylindres ou une extrudeuse, immédiatement après le mélangeage, on maintient le mélange sous tension pour l'empêcher de se contracter pendant qu'on le refroidit à une température inférieure à la température de fusion du polymère.

Par ailleurs on connaît, par US-A-4.075.158, un matériau flexible ayant un module de rigidité (selon ASTM D 747-70) inférieur à 703 daN/cm$^2$, obtenu par extrusion à une température d'au moins 343 °C d'un mélange comprenant de 30 à 80 % en poids de polysulfure de phénylène et de 20 à 70 % en poids de polytétrafluoréthylène. US-A-4.021.596 décrit un alliage thermoplastique comprenant un polysulfure de phénylène et au moins une autre résine thermoplastique choisie parmi les polyarylsulfones, les polyarylcarbonates et polyoxydes de phénylène. US-A-4.113.692 décrit une composition thermoplastique renforcée par des fibres de verre et obtenue par extrusion à une température de 232 à 299 °C de mélanges de polycarbonate et de polytéréphtalates.

On connaît enfin par le document DE-A-3.027.149 une composition contenant de 20 à 80 parties en poids d'une résine thermoplastique pulvérulente, de 80 à 20 parties en poids d'une charge minérale et 0,01 à 5 % en poids, par rapport au poids total des deux composants ci-dessus, d'une résine de polytétrafluoroéthylène (PTFE) à l'état de particules. Les particules de PTFE sont soit des fibres, soit transformées en fibres après mélange avec les autres composants par application de la pression et d'une force de cisaillement. La présence du PTFE améliore la processabilité des compositions qui peuvent être mises en œuvre selon la technique de moulage par injection.

Les matériaux composites à matrice et phase renforçante fibrillaire thermoplastiques selon l'art antérieur peuvent donc se classer en deux catégories. Dans la première catégorie, les matériaux sont obtenus en procédant en deux étapes nettement séparées consistant à composer d'abord la phase renforçante fibrillaire puis à l'insérer dans une matrice. Dans la seconde catégorie, on obtient les matériaux en ne procédant qu'à une seule étape consistant à obtenir la structure fibrillaire directement dans la matrice par extrusion à une température supérieure aux températures de fusion des deux composants. Les produits de la première catégorie sont peu économiques en raison de leur procédé d'obtention consistant en une succession de deux étapes distinctes de fabrication. Les produits de la seconde catégorie présentent l'inconvénient d'obtenir des matériaux de propriétés insuffisantes pour lesquels une trempe, à posteriori, est nécessaire pour figer la structure fibrillaire. Les matériaux contenant des charges minérales peuvent posséder des propriétés inconciliables avec les performances recherchées.

Le but de la présente invention est par conséquent la mise au point d'un procédé de fabrication en une seule étape permettant la réalisation de matériaux composites polymériques de hautes performances.

Un premier objet de la présente invention consiste en des matériaux composites constitués d'au moins un premier polymère thermoplastique jouant le rôle de matrice et d'au moins un second polymère cristallin constituant une phase renforçante fibrillaire caractérisés en ce que ledit premier polymère est présent à raison 60 à 98 % en poids et est choisi parmi les polysulfures de phénylène, les polyéthers, les polyéthers-sulfones, les polyéthers cétones, les polycarbonates, les polyamides, le polyméthacrylate de méthyle, le polystyrène, le polypropylène, les polysulfones, le polychlorure de vinyle, les polyacétals, les polyuréthanes, les polyacrylonitriles, les polyesters, l'acrylonitrile-butadiène-styrène, le styrène acrylonitrile, le polyfluoroacrylate de phényle, le polyfluoroacrylate de méthyle, et en ce que le second polymère cristallin est un polymère fluoré présent à raison de 2 à 40 % en poids et choisi parmi le polytétrafluoréthylène de masse moléculaire moyenne en nombre Mn au moins égale à 50 000 000, le poly(éthylène/propy-lène) perfluoré, le polyperfluoroalkoxy, et le polyfluorure de vinylidène.

Les proportions respectives des polymères sont naturellement dépendantes de la nature chimique des polymères en question.

Les matériaux composites ainsi obtenus présentent des propriétés remarquablement élevées et notamment supérieures à celles des matériaux composites directement obtenus à partir de mélanges

2

**0 106 764**

selon l'art antérieur. Ce résultat de la présente invention est particulièrement remarquable en ce qui concerne le module de rigidité mesuré selon la norme ASTM D 747-70, ainsi que la résistance à la corrosion. Les propriétés mécaniques de la matrice ne sont nullement altérées par l'incorporation du second polymère cristallin. Bien au contraire, alors que le premier polymère constituant la matrice peut être un matériau fragile et cassant, on a constaté que l'incorporation du second polymère cristallin permettait, selon l'invention, de renforcer ledit premier polymère pur, ce qui a été mis en évidence par la sollicitation en flexion. Par ailleurs on observe de façon surprenante une amélioration sensible des propriétés mécaniques en traction par rapport au premier polymère pur. Le module de traction est nettement renforcé pour des proportions modérées de second polymère cristallin. L'amélioration la plus spectaculaire porte sur les caractéristiques à la rupture, en contrainte et en allongement. Cette amélioration peut être au moins partiellement attribuée à la structure finale obtenue par la meilleure maîtrise de la mise en forme du mélange par rapport au premier polymère pur.

Un second objet de la présente invention est un procédé de fabrication de matériaux composites décrits ci-dessus, consistant à soumettre à une déformation par cisaillement ou étirage un mélange constitué du premier polymère thermoplastique jouant le rôle de matrice et du second polymère cristallin, caractérisé en ce que la température de déformation est inférieure à la température de fusion du second polymère et supérieure à sa température de transition cristalline, et en ce que les viscosités apparentes des deux polymères sont sensiblement peu différentes à la température de déformation choisie.

Parmi les méthodes de déformation utilisables industriellement selon la présente invention, on peut signaler en particulier les méthodes d'extrusion et d'injection, bien connues dans la transformation des matières plastiques. Le rapport des viscosités apparentes des polymères entrant dans la constitution du mélange soumis à la déformation est un élément important de leur choix : il est souhaitable que ce rapport soit, à la température de déformation choisie, compris entre 1/3 et 3.

On trouvera dans le tableau I ci-après la gamme de températures dans laquelle doit être effectué le procédé selon l'invention, en fonction du premier polymère thermoplastique utilisé, le second polymère cristallin étant le polytétrafluoréthylène.

Tableau I

| Polymère | T°C |
|---|---|
| Polysulfure de phénylène | 250 – 320 |
| Polycarbonate | 160 – 250 |
| Copolymère styrène-acrylonitrile | 110 – 150 |
| Copolymère α-méthylstyrène acrylonitrile | 120 – 190 |
| Copolyester amorphe de polyéthylène téréphtalate | 100 – 190 |
| Polystyrène | 90 – 190 |
| Polysulfone | 130 – 220 |
| Polyéthylène téréphtalate | 170 – 280 |

Le procédé, selon l'invention, permet de se passer de la trempe du mélange, après mise en œuvre, pour fixer la structure fibrillaire. Il permet de conserver la structure fibrillaire après plusieurs autres mises en œuvre, dans la mesure où l'on effectue ces dernières à une température inférieure à celle de la fusion du second polymère cristallin. Il permet également de réaliser en série, à faible coût, des pièces de forme complexe comportant des profils, canaux, éléments de circulation de fluide, emboîtements, ergots de mise en place, etc... Il permet aussi, en faisant appel à des polymères piézo-électriques, d'appliquer la présente invention aux mesures de déformation, au captage d'ondes ainsi qu'à la réalisation de microphones.

Des exemples non limitatifs sont fournis ci-après pour illustrer des modes de mise en œuvre particuliers de l'invention ?

### Exemple 1

On prépare, dans un mélangeur rapide du type PAPENMEIER, un mélange comprenant :
90 % en poids de poudre de polysulfure de phénylène commercialisée par la société Phillips sous la dénomination « RYTON P4 », et

3

10 % en poids de poudre de polytétrafluoréthylène commercialisée par la société PCUK sous la dénomination « SOREFLON 71 », de masse moléculaire moyenne en nombre Mn égale à $70 \cdot 10^6$.

A ce mélange on peut ajouter un lubrifiant interne tel que de la poudre de stéarate de zinc, pour faciliter la prise de vis au niveau de l'extrusion du granulat.

Cette opération peut durer de l'ordre de 10 minutes. Le mélange est ensuite séché dans une étuve ventilée à 120 °C avant extrusion.

On extrude le mélange ainsi obtenu, à une température affichée de 300 °C, au moyen d'une extrudeuse à vis SAMAFOR bi-étagée de diamètre D égal à 45 mm et de longueur 28 D. La vitesse de rotation est de 30 à 40 tours/minute pour un débit de 10 à 15 kg/h. Sur le matériau composite ainsi obtenu est mesuré le module de rigidité déterminé selon la norme ASTM D 747-70. Ce module a une valeur de 47 000 daN/cm².

## Exemple 2

On extrude le mélange pulvérulent obtenu dans les conditions de l'exemple 1 à travers un rhéomètre capillaire, à une température de 275 °C. Le diamètre du réservoir est de 9,5 mm, celui de la filière de 1,5 mm tandis que la longueur de la filière est de 25,7 mm et que la vitesse du piston varie entre 1 et 10 cm/minute. On obtient par ce moyen un matériau composite thermoplastique à haute performance.

## Exemple 3

Dans les conditions de l'exemple 1, on prépare un mélange comprenant :

80 % en poids de granulés de polycarbonate commercialisés par la société ATO sous la dénomination de « ORGALAN I 3000 ».

20 % en poids de poudre de polytétrafluoréthylène commercialisée par la société PCUK sous la dénomination « SOREFON 71 » (Mn = $70 \cdot 10^6$).

On extrude le mélange ainsi obtenu, à une température affichée de 220 °C, au moyen d'une extrudeuse à vis SAMAFOR mono-étagée de diamètre D égal à 30 mm et de longueur 20 D à la vitesse de rotation de 50 tours par minute.

## Exemples 4 à 9

On prépare, dans les conditions de l'exemple 3, un mélange dans lequel on remplace le polycarbonate par 80 % en poids du polymère indiqué dans le tableau II ci-après. Ce mélange extrudé à la température T °C indiquée dans le tableau II, permet d'obtenir un matériau composite thermoplastique à haute performance.

Le copolymère styrène-acrylonitrile de l'exemple 4 est commercialisé par la société BASF sous la dénomination « LURAN 388 S ».

Le copolymère α-méthylstyrène acrylonitrile de l'exemple 5 est commercialisé par la société BASF sous la dénomination « LURAN KR 2556 U ».

Le polyéthylène téréphtalate de l'exemple 6 est commercialisé par la société EASTMAN KODAK CHEMICAL sous la dénomination de « KODAR PETG ».

Le polystyrène de l'exemple 7 est commercialisé par la société CdF Chimie sous la dénomination « GEDEX 8 S ».

Le polysulfone de l'exemple 8 est commercialisé par la société UNION CARBIDE sous la dénomination de « UDEL 1700 ».

Le polyéthylène téréphtalate de l'exemple 9 est commercialisé par la société I.C.I. sous la dénomination de « MELINAR ».

## Tableau II

| Exemple | Polymère | T°C |
|---------|----------|-----|
| 4 | Copolymère styrène-acrylonitrile | 145 |
| 5 | Copolymère α-méthylstyrène acrylonitrile | 145 |
| 6 | Copolyester amorphe de polyéthylène téréphtalate | 150 |
| 7 | Polystyrène | 130 |
| 8 | Polysulfone | 150 |
| 9 | Polyéthylène téréphtalate | 200 |

**0 106 764**

## Revendications

1. Matériaux composites constitués d'au moins un premier polymère thermoplastique jouant le rôle de matrice et d'au moins un second polymère cristallin constituant une phase renforçante fibrillaire caractérisés en ce que ledit premier polymère est présent à raison de 60 à 98 % en poids et est choisi parmi les polysulfures de phénylène, les polyéthers, les polyéthers-sulfones, les polyéthers cétones, les polycarbonates, les polyamides, le polyméthacrylate de méthyle, le polystyrène, le polypropylène, les polysulfones, le polychlorure de vinyle, les polyacétals, les polyuréthanes, les polyacrylonitriles, les polyesters, l'acrylonitrile-butadiène-styrène, le styrène acrylonitrile, le polyfluoroacrylate de phényle, le polyfluoroacrylate de méthyle, et en ce que le second polymère cristallin est un polymère fluoré présent à raison de 2 à 40 % en poids et choisi parmi le polytétrafluoréthylène de masse moléculaire moyenne en nombre Mn au moins égale à 50 000 000, le poly(éthylène/propylène) perfluoré, le polyperfluoroalkoxy, et le polyfluorure de vinylidène.

2. Procédé de fabrication de matériaux composites selon la revendication 1, consistant à soumettre à une déformation par cisaillement ou étirage un mélange constitué du premier polymère thermoplastique jouant le rôle de matrice et du second polymère cristallin, caractérisé en ce que la température de déformation est inférieure à la température de fusion du second polymère et supérieure à sa température de transition cristalline, et en ce que les viscosités apparentes des deux polymères sont sensiblement peu différentes à la température de déformation choisie.

3. Procédé selon la revendication 2, caractérisé en ce que le rapport des viscosités apparentes des polymères entrant dans la constitution du mélange soumis à déformation est compris entre 1/3 et 3.

4. Procédé selon l'une des revendications 2 et 3, caractérisé en ce que le premier polymère thermoplastique est du polysulfure de phénylène et que la température de déformation est comprise entre 250 et 320 °C.

5. Procédé selon l'une des revendications 2 et 3, caractérisé en ce que le premier polymère thermoplastique est du polycarbonate et que la température de déformation est comprise entre 160 et 250 °C.

6. Procédé selon l'une des revendications 2 et 3, caractérisé en ce que le premier polymère thermoplastique est un copolymère styrène acrylonitrile et que la température de déformation est comprise entre 110 et 150 °C.

7. Procédé selon l'une des revendications 2 et 3, caractérisé en ce que le premier polymère thermoplastique est un copolymère α-méthyl-styrène-acrylonitrile et que la température de déformation est comprise entre 120 et 190 °C.

8. Procédé selon l'une des revendications 2 et 3, caractérisé en ce que le premier polymère thermoplastique est un copolyester amorphe de polyéthylène téréphtalate et que la température de déformation est comprise entre 100 et 190 °C.

9. Procédé selon l'une des revendications 2 et 3, caractérisé en ce que le premier polymère thermoplastique est un polystyrène et que la température de déformation est comprise entre 90 et 190 °C.

10. Procédé selon l'une des revendications 2 et 3, caractérisé en ce que le premier polymère thermoplastique est une polysulfone et que la température de déformation est comprise entre 130 et 220 °C.

11. Procédé selon l'une des revendications 2 et 3, caractérisé en ce que le premier polymère thermoplastique est un polyéthylène téréphtalate et que la température de déformation est comprise entre 170 et 280 °C.

## Claims

1. Composite materials comprising at least one first thermoplastic polymer as a matrix and at least one second crystalline polymer acting as a fibrous reinforcing phase, characterized in that the said first polymer is present at the rate of 60 to 98 % by weight and is selected from polyphenylene sulfides, polycarbonates, polyamides, polymethylmethacrylate, polystyrene, polypropylene, polysulfone, polyvinyl chloride, polyethers, sulfone-polyethers, cetone-polyethers, polyacetals, polyurethanes, polyacrylonitrile, polyesters, acrylonitrile-butadiene-styrene and acrylonitrile-styrene copolymers, polyfluorophenylacrylate, polyfluoromethylacrylate and the second crystalline polymer is a fluorinated polymer which is present at the rate of 2 to 40 % by weight and which is selected from polytetrafluoroethylene with a number average molecular weight Mn at least equal to 50 000 000, perfluorinated poly(ethylene/propylene), perfluoroalkoxy polymer and polyvinylidene fluoride.

2. A process for the manufacture of composite materials according to claim 1, consisting in subjecting to deformation by shear or stretching a mixture comprising the first thermoplastic polymer as a matrix and the second crystalline polymer, characterized in that the deformation temperature is lower than the melting temperature of the second polymere and higher than its crystalline transition temperature, and the apparent viscosities of the two polymers are substantially few different, at the selected deformation temperature.

3. A process according to claim 2, characterized in that the ratio of the apparent viscosities of the

5

polymers constituting the mixture subjected to deformation is between 1/3 and 3.

4. A process according to either of claims 2 and 3, characterized in that the first thermoplastic polymer is a polyphenylene sulfide and its deformation temperature is between 250 and 320 °C.

5. A process according to either of claims 2 and 3, characterized in that the first thermoplastic polymer is a polycarbonate and its deformation temperature is between 160 and 250 °C.

6. A process according to either of claims 2 and 3, characterized in that the first thermoplastic polymer is a styrene-acrylonitrile copolymer and its deformation temperature is between 110 and 150 °C.

7. A process according to either of claims 2 and 3, characterized in that the first thermoplastic polymer is an alphamethylstyrene-acrylonitrile copolymer and its deformation temperature is between 120 and 190 °C.

8. A process according to either of claims 2 and 3, characterized in that the first thermoplastic polymer is an amorphous polyethylene terephatalate copolymer and its deformation temperature is between 100 and 190 °C.

9. A process according to either of claims 2 and 3, characterized in that the first thermoplastic polymer is a polystyrene and its deformation temperature is between 90 and 190 °C.

10. A process according to either of claims 2 and 3, characterized in that the first thermoplastic polymer is a polysulfone and its deformation temperature is between 130 and 220 °C.

11. A process according to either of claims 2 and 3, characterized in that the first thermoplastic polymer is a polyethylene terephtalate and its deformation temperature is between 170 and 280 °C.

**Patentansprüche**

1. Verbundmaterialien, bestehend aus mindestens einem ersten, thermoplastischen Polymer, das die Rolle einer Matrix spielt, und aus mindestens einem zweiten, kristallinen, eine fibrilläre verstärkende Phase bildenden Polymer, dadurch gekennzeichnet, daß das genannte erste Polymer in einer Menge von 60 bis 98 Gew.-% vorliegt und ausgewählt ist aus der Gruppe bestehend aus den Phenylenpolysulfiden, den Polyethern, den Polyethersulfonen, den Polyetherketonen, den Polycarbonaten, den Polyamiden, Methylpolymethacrylat, Polystyrol, Polypropylen, den Polysulfonen, Vinylpolychlorid, den Polyacetalen, den Polyurethanen, den Polyacrylnitrilen, den Polyestern Acrylnitril-Butadien-Styrol, Styrol-Acrylnitril, Phenylpolyfluoracrylat und Methylpolyfluoracrylat, und daß das zweite, kristalline Polymer ein Fluor-Polymer ist, das in einer Menge von 2 bis 40 Gew.-% vorliegt und ausgewählt ist aus der Gruppe bestehend aus Polytetrafluorethylen mit einer durch das Zahlenmittel ausgedrückten Molekularmasse Mn von mindestens 50 000 000, Perfluor-poly(ethylen/propylen), Polyperfluoralkoxy und Vinylidenpolyfluorid.

2. Verfahren zur Herstellung von Verbundmaterialien nach Anspruch 1, das darin besteht, daß eine aus dem ersten, thermoplastischen Polymer, das die Rolle der Matrix spielt, und dem zweiten, kristallinen Polymer gebildete Mischung durch Scheren oder Ziehen verformt wird, dadurch gekennzeichnet, daß die Verformungstemperatur niedriger ist als die Schmelztemperatur des zweiten Polymers und höher als dessen Kristallisations-Übergangstemperatur, und daß die Scheinviskositäten der beiden Polymere bei der gewählten Verformungstemperatur im wesentlichen wenig unterschiedlich sind.

3. Verfahren nach Anspruch 2, dadurch gekennzeichnet, daß das Verhältnis der Scheinviskositäten der zur Bildung, der der Verformung unterworfenen Mischung eingesetzten Polymere zwischen 1/3 und 3 liegt.

4. Verfahren nach Anspruch 2 oder 3, dadurch gekennzeichnet, daß das erste, thermoplastische Polymer Phenylenpolysulfid ist und die Verformungstemperatur zwischen 250° und 320 °C liegt.

5. Verfahren nach Anspruch 2 oder 3, dadurch gekennzeichnet, daß das erste, thermoplastische Polymer Polycarbonat ist und die Verformungstemperatur zwischen 160° und 250 °C liegt.

6. Verfahren nach Anspruch 2 oder 3, dadurch gekennzeichnet, daß das erste, thermoplastische Polymer ein Styrol/Acrylnitril-Copolymer ist und die Verformungstemperatur zwischen 110° und 150 °C liegt.

7. Verfahren nach Anspruch 2 oder 3, dadurch gekennzeichnet, daß das erste, thermoplastische Polymer ein α-Methylstyrol/Acrylnitril-Copolymer ist und die Verformungstemperatur zwischen 120° und 190 °C liegt.

8. Verfahren nach Anspruch 2 oder 3, dadurch gekennzeichnet, daß das erste, thermoplastische Polymer ein amorpher Copolyester von Polyethylenterephthalat ist und die Verformungstemperatur zwischen 100° und 190 °C liegt.

9. Verfahren nach Anspruch 2 oder 3, dadurch gekennzeichnet, daß das erste, thermoplastische Polymer ein Polystyrol ist und die Verformungstemperatur zwischen 90° und 190 °C liegt.

10. Verfahren nach Anspruch 2 oder 3, dadurch gekennzeichnet, daß das erste, thermoplastische Polymer ein Polysulfon ist und die Verformungstemperatur zwischen 130° und 220 °C liegt.

11. Verfahren nach Anspruch 2 oder 3, dadurch gekennzeichnet, daß das erste, thermoplastische Polymer ein Polyethylenterephthalat ist und die Verformungstemperatur zwischen 170° und 280 °C liegt.